# EUROPEAN PATENT APPLICATION

(11) **EP 4 704 062 A1**
(43) Date of publication of application: **04.03.2026**
(21) Application number: 24196729.8
(22) Date of filing: 27.08.2024
(51) Int. Cl.: G08G 1/01, G08G 1/09, G08G 1/0967, G01C 21/36, G01C 21/00, G06F 21/64, H04W 4/021

(54) **UPDATING ZONES FOR AUTONOMOUS VEHICLES**

(71) Applicant: Volvo Autonomous Solutions AB, 405 08 Göteborg (SE)
(72) Inventor: Bergquist, Stefan, 417 27 Göteborg (SE); Martinsson, Jonas, 725 94 Västerås (SE)
(74) Representative: Valea AB

(57) **Abstract**

A computer system (600) comprising processing circuitry (602) configured to handle a set of zones (1) arranged for one or more autonomous vehicles (5) is provided. The processing circuitry (602) is configured to obtain an indication of the set of zones (1) and an update (2) to the set of zones (1). The processing circuitry (602) is configured to produce an updated set of zones (3), based on the update and the indication of the set of zones (1). The processing circuitry (602) is configured to provide an indication of the update (2) or the updated set of zones (3) to a verifying entity (12). The processing circuitry (602) is configured to, in response to obtaining a confirmation that the update (2) or the updated set of zones (3) provided to the verifying entity (12) is approved, provide an indication of the update (2) or the updated set of zones (3) to the one or more autonomous vehicles (5).

## Description

### TECHNICAL FIELD

The disclosure relates generally to autonomous vehicles. In particular aspects, the disclosure relates to updating zones for autonomous vehicles. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

For autonomous vehicles there is often a need to adapt the parameters for different zones. The parameters may for example relate to speed limits or functional requirements for the autonomous vehicles. The zones could relate to areas with more or less traffic, areas with or without manually driven vehicles or other manual actors present, etc., which all may have different requirements and optimal parameters for the operation of autonomous vehicles.

To adapt the parameters, geofencing is often used where parameters for the autonomous vehicles are configured for each zone, such that a speed limit may be set for a certain zone. The zone may be defined as an area by positional coordinates, e.g., using Global Positioning System (GPS) or any other positioning system.

Parameters of an autonomous vehicle can then be adjusted by comparing its position to the different zones and adjust the parameters accordingly.

Typically the zones are static, and updates are not needed very often. A parking spot for example, tend to be constant over time while a loading/unloading spot might change but at a rate where it is ok that the update process is a bit time consuming. However, for some zones, updates are needed to be more frequent.

Updates may relate to adjusting parameters for the zone, adjusting the associated area, or may even relate to adding new zones for the autonomous vehicles to operate in.

The autonomous vehicles cannot be allowed to operate in zones configured using incorrect parameters and if such an act would happen, the associated work site may need to be shut down and thereby causing inefficiency and productivity loss. Similarly the autonomous vehicles may not be allowed to operate outside a zone. Hence, updating the zones may require a temporary stop of production or operation of the autonomous vehicles in associated work sites or zones.

Updating zones may be performed in two major aspects, where one option is to use verified safety software, typically centralized in one server or dedicated machine. Such a safety software is however very time consuming to develop or to modify as any detail modified or developed needs to be thoroughly tested, documented, and reviewed. As an alternative, no safety software is used and instead, validation and verification activities are performed after each update of the software or zones, to ensure a correct function which would require test engineers to get on site and perform physical tests which would lead to halt in production, etc. So each update will be costly in terms of time and productivity.

Hence, there is a need for more efficiently update zones for autonomous vehicles.

### SUMMARY

According to a first aspect of the disclosure, a computer system is provided. The computer system comprises processing circuitry configured to handle a set of zones arranged for one or more autonomous vehicle. Each zone in the set of zones is indicative of a respective area and indicative of one or more parameters for the one or more autonomous vehicles to operate in the respective area.

As a non-limiting example, the one or more parameters may comprise a speed limit for the area, or a set of requirements of enabled functions of the one or more autonomous vehicles for operating in the respective area. As other non-limiting examples, the one or more parameters may additionally or alternatively comprise a limit to a steering angle or rules related to State of Charge (SoC) or battery management for electric vehicles. In other words, the one or more parameters may limit or determine operations for the one or more autonomous vehicles to operate in the respective area.

The processing circuitry is configured to obtain an indication of the set of zones.

The processing circuitry is configured to obtain an update to the set of zones. The update comprises a change to one or more current zones in the set of zones. Additionally or alternatively, the update comprises an insertion of a new zone in the set of zones.

The processing circuitry is configured to produce an updated set of zones based on the update and the indication of the set of zones.

The processing circuitry is configured to provide an indication of the update or the updated set of zones to a verifying entity.

The processing circuitry is configured to, in response to obtaining a confirmation that the update or the updated set of zones provided to the verifying entity is approved, provide an indication of the update or the updated set of zones to the one or more autonomous vehicles.

The first aspect of the disclosure may seek to improve efficiency in updating zones for the autonomous vehicles.

A technical benefit may include improved efficiency in updating the set of zones.

In particular, as the update or the updated set of zones is only indicated to the one or more autonomous vehicles in response to obtaining the confirmation that the update or the updated set of zones provided to the verifying entity is approved, the update of zones to the autonomous vehicle can be sped up and performed in a safe manner. This is since the performance bottleneck of securely verifying the change can be moved to only a single point, namely the verifying entity.

Due to the use of the verifying entity, the verification can be offloaded to any suitable entity, such as to prompt an operator initiating the update to verify the update, or to use an automated system for verifying that the update or updated set of zones corresponds to an intended update of the obtained update.

Due to the distributed nature of utilizing the verifying entity, performance of the update can be increased, and the use of critical safety software which otherwise may need to be formally verified or approved can be minimized such that updates to the set of zones can be performed without shutdowns, or with heavily reduced time of shutdowns.

In other words, due to the use of the verifying entity the autonomous vehicles will faster be able to acquire the updated set of zones such that minimal or no shutdowns of a worksite affected by the update may be needed. Furthermore, the update may be ensured by the verifying entity to be correct such that no unintentional shutdowns to incorrect zones may be needed.

Optionally in some examples, including in at least one preferred example, the update to the set of zones is further accompanied by a first error-detecting code. In these examples, the processing circuitry is further configured to, based on the first error-detecting code, determine a validity of the update. In these examples, producing the updated set of zones is performed in response to determining that the update is valid with respect to the first error-detecting code.

A technical benefit may include more efficient update of the set of zones for the one or more autonomous vehicles. This is since the obtained update can be determined to be valid with respect to what was intended to be updated. If the error-detecting code indicates that there is no error, it follows that there is a lower risk of providing an incorrect update which could cause a shutdown or restart of the update procedure of the first aspect. Hence, the updated set of zones can thereby be obtained by the autonomous vehicles in a faster manner.

Optionally in some examples, including in at least one preferred example, the first error-detecting code is a Cyclic Redundancy Check (CRC) code, of an intended update to the set of zones.

A technical benefit may include more efficient update of the set of zones for the one or more autonomous vehicles. This is since the use of the CRC will with high accuracy detect if slight changes to the update has been made. This is since a CRC code may typically relate to an integrity check of data with respect to a bit pattern, and if the pattern changes, the CRC code will no longer match.

Optionally in some examples, including in at least one preferred example, the processing circuitry is further configured to, when determining that the update is not valid with respect to the first error-detecting code, issue an indication indicating that the obtained update is not used to update the set of zones.

A technical benefit may include more efficient update of the set of zones for the one or more autonomous vehicles. This is since the procedure of updating the set of zones can be restarted in rapid manner and/or a diagnosis of why the update was not valid with respect to the first error-detecting code may be initiated.

Optionally in some examples, including in at least one preferred example, the processing circuitry is further configured to, when determining that the update is valid with respect to the first error-detecting code, provide the indication of the update or the updated set of zones to the verifying entity accompanied with a second error-detecting code.

A technical benefit may include more efficient update of the set of zones for the one or more autonomous vehicles. This is since the verifying entity may proceed with verifying the update or updated set of zones guaranteed by that the update was valid with respect to the first error-detecting code, and wherein the verifying unit is able to further verify the update or the updated set of zones provided to the verifying entity with respect to the second error-detecting code. Using an error-detecting code may quickly indicate if the update or updated set of zones is incorrect, e.g., in comparison to what was provided to the verifying entity.

Optionally in some examples, including in at least one preferred example, the second error-detecting code is a CRC code, of the update or the updated set of zones.

A technical benefit may include more efficient update of the set of zones for the one or more autonomous vehicles. This is since the use of the CRC will with high accuracy detect if slight changes to the update or the updated set of zoned has been made.

In examples herein, other error detecting codes than CRC may be used, such as any suitable error detection or correction method, e.g., any of: using checksums, Forward Error Detection (FEC), parity bits, repetition codes, etc.

Optionally in some examples, including in at least one preferred example, the computer system is a distributed system comprising one or more modules.

In these examples, the one or more modules comprises any one or more out of:
- a first software module, configured to provide the update to the set of zones,
- a second software module, configured to verify the update or the updated set of zones and/or provide the update or the updated set of zones to an operator for verification, and/or when the update is not valid, configured to provide an indication to the operator or a providing entity indicating that the update is not used to update the set of zones, and
- a third software module configured to: determine the validity of the update to the set of zones based on a first error-detecting code, produce an updated set of zones, and provide an indication of the update or the updated set of zones to a verifying entity accompanied with a second error-detecting code.

In some examples herein, the second software module may represent at least part of the verifying entity.

A technical benefit may include more efficient update of the set of zones for the one or more autonomous vehicles. This is since the modules can be distributed in a more efficient manner, e.g., on different devices or to be in differently secured software domains such that it is possible to reduce the use of critical safety software which otherwise may need to be formally verified or approved can be minimized such that updates to the set of zones can be performed without shutdowns, or with heavily reduced time of shutdowns.

Optionally in some examples, including in at least one preferred example, the second software module is configured to receive, as accompanied by an indication of the update or the updated set of zones, a second error-detecting code, and to verify the validity of the indication of the update or the updated set of zone based on the second error-detecting code.

A technical benefit may include more efficient update of the set of zones for the one or more autonomous vehicles. This is since this allows the distributed system to execute in a more efficient manner as the provided update can be verified such that the distributed system can operate without all software modules having to be part of critical safety software which otherwise may need to be formally verified or run in a certain approved environment.

Optionally in some examples, including in at least one preferred example, the second software module is configured to prompt an operator to confirm that the update or the updated set of zones provided to the verifying entity is approved and/or provide the confirmation that the update or the updated set of zones provided to the verifying entity is approved to the third software module in response to determining that the update to the set of zones as provided by the first software module corresponds with the update or the updated set of zones as provided by the third software module.

A technical benefit may include more efficient update of the set of zones for the one or more autonomous vehicles. This is since the update or the updated set of zones can be confirmed by the operator or software which initiated the update, e.g., by comparing the intended update with the produced updated set of zones or update provided to the verifying entity.

Optionally in some examples, including in at least one preferred example, the third software module is configured to provide the indication of the update or the updated set of zones to the one or more autonomous vehicles in response to receiving the confirmation.

A technical benefit may include more efficient update of the set of zones for the one or more autonomous vehicles. This is since the critical aspects of handling the updated set of zones and providing an indication of them to the one or more autonomous vehicles can be contained to only the third software module which can be part of a secure software domain or may be the only software module which may need to be part of critical safety software, which the other aspects of providing the initial update and verifying the update can be offloaded, e.g., to the first and/or the second software module.

According to a second aspect of the disclosure, an autonomous vehicle configured to operate based on a set of zones is provided. Each zone in the set of zones is indicative of a respective area and indicative of one or more parameters for the autonomous vehicle to operate in the respective area. The set of zones is arranged to be updated using a computer system according to the first aspect. The autonomous vehicle may be configured to receive an update to the set of zones, or an updated set of zones from the computer system according to the first aspect.

According to a third aspect of the disclosure, a computer-implemented method for handling a set of zones arranged for one or more autonomous vehicles is provided. Each zone in the set of zones is indicative of a respective area and indicative of one or more parameters for the one or more autonomous vehicles to operate in the respective area.

The method comprises, by processing circuitry of a computer system, obtaining an indication of the set of zones.

The method comprises, by the processing circuitry, obtaining an update to the set of zones, the update comprising a change to one or more current zones in the set of zones and/or an insertion of a new zone in the set of zones.

The method comprises, by the processing circuitry, based on the update and the indication of the set of zones, producing an updated set of zones.

The method comprises, by the processing circuitry, providing an indication of the update or the updated set of zones to a verifying entity.

The method comprises, by the processing circuitry, in response to obtaining a confirmation that the update or the updated set of zones provided to the verifying entity is approved, providing an indication of the update or the updated set of zones to the one or more autonomous vehicles.

Optionally in some examples, including in at least one preferred example, the update to the set of zones is further accompanied by a first error-detecting code. In some of these examples, the method comprises, by the processing circuitry, based on the first error-detecting code, determining a validity of the update, and wherein producing the updated set of zones is performed in response to determining that the update is valid with respect to the first error-detecting code.

Optionally in some examples, including in at least one preferred example, the first error-detecting code is a CRC code of an intended update to the set of zones.

Optionally in some examples, including in at least one preferred example, the method further comprises, when determining that the update is not valid with respect to the first error-detecting code, issuing an indication indicating that the obtained update is not used to update the set of zones.

Optionally in some examples, including in at least one preferred example, the method further comprises, when determining that the update is valid with respect to the first error-detecting code, providing the indication of the update or the updated set of zones to the verifying entity accompanied with a second error-detecting code.

Optionally in some examples, including in at least one preferred example, the second error-detecting code is a CRC code, of the update or the updated set of zones.

Optionally in some examples, including in at least one preferred example, the computer system is a distributed system comprising one or more modules, and wherein the one or more modules comprises any one or more out of:
- a first software module, configured to provide the update to the set of zones,
- a second software module, configured to verify the update or the updated set of zones and/or provide the update or the updated set of zones to an operator for verification, and/or when the update is not valid, configured to provide an indication to the operator or a providing entity indicating that the update is not used to update the set of zones,
- a third software module configured to: determine the validity of the update to the set of zones based on a first error-detecting code, produce an updated set of zones, and provide an indication of the update or the updated set of zones to a verifying entity accompanied with a second error-detecting code.

Optionally in some examples, including in at least one preferred example, the second software module is configured to receive, as accompanied by an indication of the update or the updated set of zones, a second error-detecting code, and to verify the validity of the indication of the update or the updated set of zone based on the second error-detecting code.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary system according to an example.
**FIG. 2** is a flow chart of an example method.
**FIG. 3** illustrates an example scenario.
**FIG. 4** is another view of **FIG. 1****,** according to an example.
**FIG. 5** is a flow chart of an exemplary method according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

Examples herein relate to a more efficient update of zones for autonomous vehicles. In particular the examples herein increase speed and reliability of zone updates to autonomous vehicles and due to the reliable and quick update of zones of examples herein, shutdown of production related to the update may be reduced or avoided.

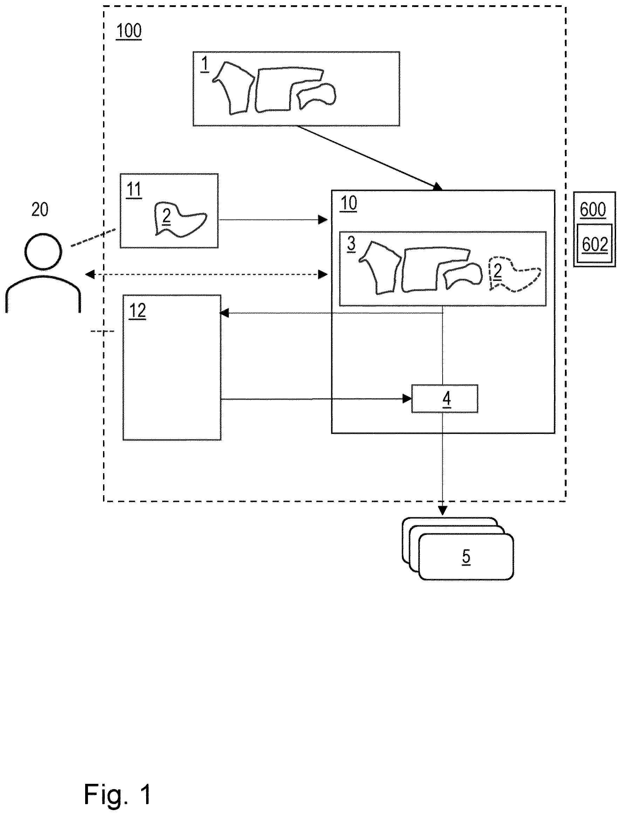

**FIG. 1** illustrates an example system diagram of examples herein.

In examples herein, an operator 20 may be present. The operator 20 may be a user who intends to update the set of zones 1.

Examples herein may be performed by a **computer system 600** and/or a **processing circuitry 602** therein.

Additionally or alternatively, examples herein may be performed as part of a **distributed system 100,** e.g., wherein the computer system 600 is comprised, or preferably where the distributed system 100 is part of the computer system 600.

Examples herein relate to updating a **set of zones 1** for **one or more autonomous vehicles 5.** The set of zones 1 may be stored in a storage medium of the computer system 600 and/or of the distributed system 100 and/or in any other accessible storage medium in any suitable manner.

Each zone in the set of zones 1 is indicative of a respective area and indicative of one or more parameters for the one or more autonomous vehicles 5 to operate in the respective area. The set of zones 1 is arranged to be updated using the computer system 600 in examples herein.

The one or more autonomous vehicles 5 may comprise any suitable vehicle, e.g., heavy-duty vehicle, truck, car, bus, marine vessel, construction equipment, or any other suitable vehicle.

The one or more autonomous vehicles 5 may be autonomous such that they operate at least partly without input or control by an operator. Typically, each of the one or more autonomous vehicles 5 may have been configured with a mission or task, such as to travel to certain destinations, transport certain goods, etc.

The one or more autonomous vehicles 5 may have been configured with the set of zones 1 such that the one or more autonomous vehicles 5 are configured to operate in the respective areas of the set of zones 1 according to the respective parameters for the respective zone.

The one or more parameters for the set of zones 1 may relate to any suitable parameter for operations of the one or more autonomous vehicles 5, such as any one or more out of:
- a speed limit for the respective area,
- functional requirements for the respective area, e.g., which functions need to be activated for the one or more autonomous vehicles 5 to travel therein, such as to have pedestrian detection enabled or to be configured with a certain brake configuration, and
- steering angle limit,
- SoC or battery management limits such as only allowing vehicle with above a set SoC to operate in the respective area, and
- only allowing a vehicle of a specific type and/or with a specific function or functionality enabled to travel the respective area.

A number of entities such as, a **producing entity 10,** a **providing entity 11,** and/or a **verifying entity 12,** may be part of examples herein such as standalone entities or entities part of the computer system 600 and/or the distributed system 100. The entities 10, 11, 12, may relate to different software modules and/or different control or processing units, and/or different logical abstraction of processing or performing actions of examples herein.

In other words, the entities 10, 11, 12 may be used in examples herein to illustrate a use of separation of abstraction or processing for updating the set of zones 1, but these entities may or may not be part of the same system 100, 600, in any suitable manner.

The entities 10, 11, 12 may typically be represented as control or processing units or software modules, but may in some examples herein, also be represented by a respective operator(s), respective user interface(s) and/or respective user input(s). In other words, the entities 10, 11, 12 may be automated entities or in some examples, manually controlled or partly manually controlled entities.

In some examples, the processing circuitry 602 is configured to control the producing entity 10 and/or software associated with the producing entity 10. In some of these examples, other respective processing circuitry, control unit, or manual actor controls or partly controls the providing entity 11 and/or the verifying entity 12. In some of these examples, the operator 20 may partly control both of the providing entity 10 and verifying entity 12.

The examples herein relate to that the computer system 600 comprising the processing circuitry 602 is configured to handle the set of zones 1 arranged for the one or more autonomous vehicles 5. Each zone in the set of zones 1 is indicative of a respective area and indicative of one or more parameters for the one or more autonomous vehicles 5 to operate in the respective area.

The processing circuitry 602 may be configured to act as, and/or to represent the producing entity 10 as illustrated in FIG. 1.

The processing circuitry 602 is further configured to obtain an indication of the set of zones 1. The set of zones 1 may be obtained from any suitable storage medium where the latest valid set of zones are stored.

The processing circuitry 602 is further configured to obtain an **update 2** to the set of zones 1. The update comprises a change to one or more current zones in the set of zones 1 and/or an insertion of a new zone in the set of zones 1. The update may be provided by the providing entity 11, which in turn may have obtained the update as input from the operator 20.

The processing circuitry 602 is further configured to, based on the update and the indication of the set of zones 1, produce an **updated set of zones 3.**

The processing circuitry 602 is further configured to, provide an indication of the update 2 or the updated set of zones 3 to the verifying entity 12. The verifying entity 12 may then compare the indicated update or the updated set of zones 12 with the update 2 provided to the processing circuitry 602, e.g., by an automated comparison or by the user 20 reviewing the indicated update or the updated set of zones 3 with respect to an intended update by the user 20.

The processing circuitry 602 is further configured to, in response to obtaining a confirmation that the update 2 or the updated set of zones 3 provided to the verifying entity 12 is approved, provide an indication of the update 2 or the updated set of zones 3 to the one or more autonomous vehicles 5. The confirmation may preferably be provided by the verifying entity 12, the providing entity 11, or by the operator 20. The operator 20 may trigger the confirmation to be provided when confirming that the indication of the update 2 or the updated set of zones 3 corresponds to an intended update by the operator 20. The confirmation may be obtained as part of a **confirmation receiving module 4** of the producing entity 10 for controlling when and if to provide the updated set of zones, or the update 2, to the one or more autonomous vehicles 5. The confirmation receiving module 4 may be a logical abstraction and may be part of any software module of examples herein.

Since the operator 20, or an automatic procedure compares the update with an intended update it is confirmed that the correct update is provided to the one or more autonomous vehicles 5. If not confirmed, the update may get corrupted during any of the steps, e.g., due to a spontaneous bit flip or by malicious attacks or by human errors or any other reason.

In some examples herein, the distributed system 100 comprises one or more modules, in particular software modules. The one or more modules comprises any one or more out of: a first software module, a second software module, and a third software module.

The first software module may be part of the providing entity 11, e.g., as arranged to be executed by the providing entity 11.

The second software module may be part of the verifying entity 12, e.g., as arranged to be executed by the verifying entity 12.

The third software module may be part of the producing entity 10, e.g., as arranged to be executed by the producing entity 10. The third software module may be part of a critical software which may need to be formally verified or authorized when changed and hence, examples herein may relate to perform supplying and verifying of updates of the set of zones 1 outside of the third software module such as to speed up the updating procedure.

The first software module may be configured to provide the update 2 to the set of zones 1, e.g., to the producing entity 10 and/or the third software module.

The second software module may be configured to verify the update 2 or the updated set of zones 3 and/or provide the update 2 or the updated set of zones 3 to an operator for verification. When the update is not valid, the second software module may be configured to provide an indication to the operator 20 or the providing entity 11, indicating that the update 2 is not used to update the set of zones 1.

The third software module may be configured to determine the validity of the update 2 to the set of zones 1, e.g., based on a first error-detecting code. The third software module may be configured to produce an updated set of zones 3, and provide an indication of the update 2 or the updated set of zones 3 to the verifying entity 12 e.g., accompanied with a second error-detecting code.

In these examples, the second software module is configured to receive, as accompanied by an indication of the update 2 or the updated set of zones 3, the second error-detecting code, e.g., as provided by the third software module and/or producing entity 10, and to verify the validity of the indication of the update 2 or the updated set of zone based on the second error-detecting code.

In some examples, the second software module is configured to prompt the operator 20 to confirm that the update 2 or the updated set of zones 3 provided to the verifying entity 12 is approved.

In some examples, the second software module is configured to provide the confirmation that the update 2 or the updated set of zones 3 provided to the verifying entity 12 is approved to the third software module in response to determining that the update 2 to the set of zones 1, e.g., as provided by the first software module and/or the providing entity 11, corresponds with the update 2 or the updated set of zones 3, e.g., as provided by the third software module and/or the producing entity 10.

In some examples, the third software module is configured to provide the indication of the update 2 or the updated set of zones 3 to the one or more autonomous vehicles 5 in response to receiving the confirmation.

In any of the examples herein, an action as described to be performed by a software module or entity 10, 11, 12 may comprise triggering a control unit to provide a signal which performs said action, e.g., to provide information between the entities 10, 11, 12, the operator 20, or to the one or more autonomous vehicles 5.

In some examples herein, the operator 20, e.g., using the processing circuitry 602, may provide input of an update to the set of zones 1 through or using the providing entity 11, the operator 20 may review an update of the set of zones 1 using the verifying entity 12, and the operator 20 may further provide an update approval of the updated set of zones directly or indirectly to the producing entity 10.

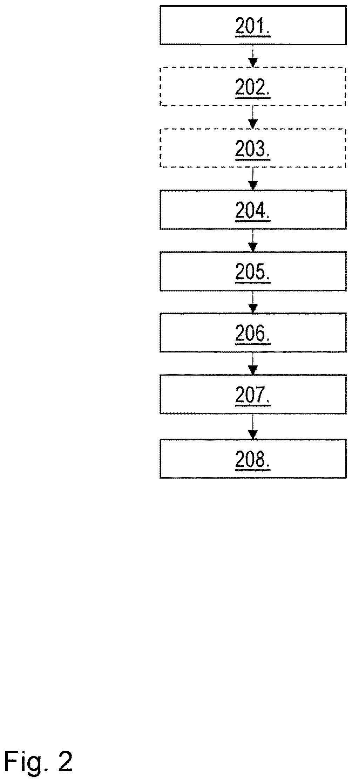

**FIG. 2** is a flow chart of a computer-implemented method for handling the set of zones 1 arranged for the one or more autonomous vehicles 5. Each zone in the set of zones 1 is indicative of a respective area and indicative of one or more parameters for the one or more autonomous vehicles 5 to operate in the respective area.

As part of performing the method, the one or more autonomous vehicles 5 may be triggered to stop such that they do not violate any of the parameters to be updated. Other independent or combinable options that may comprise stopping the site of the vehicles 5, or that the vehicles 5 operate under a degraded mode such that they may be allowed to operate with increased readiness to brake or stop.

The method comprises the following actions, which may be taken in any suitable order. Dashed boxes in FIG. 2 may indicate optional actions.

The actions may be performed by the processing circuitry 602 of a computer system 600 and/or by the computer system 600 as part of the distributed system 100, e.g., where different operations may be performed by the providing entity 11, the producing entity 10, and the verifying entity 12.

Preferably, below actions may be performed by the processing circuitry 602 as part of the producing entity 10.

### Action 201

The method comprises obtaining an indication of the set of zones 1. Obtaining the indication of the set of zones 1 may comprise obtaining the set of zones 1 from a storage medium. Obtaining an indication of the set of zones 1 in the example herein may mean to obtain the set of zones 1 directly or indirectly, by any suitable means and in any suitable representation.

The set of zones 1 may alternatively be obtained as part of an update to the set of zones 1, e.g., as part of action 202 below.

### Action 202

The method comprises obtaining the update 2 to the set of zones 1. The update 2 may be provided by the providing entity 11 or from the operator 20. The update 2 comprises a change to one or more current zones in the set of zones 1 and/or an insertion of a new zone in the set of zones 1. For example, the update 2 may be a change in an area of a zone such as an expansion of an area, merging of zones, or deletion of a zone. Additionally or alternatively, the update 2 may be a change in the parameters of the respective areas of the respective zones, e.g., a change in speed limit for the one or more autonomous vehicles 5 when travelling in the respective area.

The update 2 may be accompanied by a first error-detecting code. The first error-detecting code may be a code for determining integrity of the update, i.e., for determining whether or not the update 2 has changed from as it was intended to be provided, e.g., from the providing entity 11 and/or the operator 20 to the producing entity 10. The first error-detecting code may be a CRC code, e.g., of an intended update 2 to the set of zones 1.

### Action 203

The method may comprise, when the update 2 to the set of zones 1 further is accompanied by the first error-detecting code, based on the first error-detecting code, determining a validity of the update 2.

For example, if the first error-detecting code does not correspond to a current content of the update 2, then the update 2 may have been corrupted as provided or due to an attack, and the update 2 shall be determined to be invalid.

If the first error-detecting code correspond to a current content of the update 2, then the update 2 may be determined to be invalid.

It shall be noted that error-detecting codes cannot detect all errors but if there is an error, the update 2 may quickly be determined to be invalid.

### Action 204

The method comprises, based on the update and the indication of the set of zones 1, producing the updated set of zones 3. In some examples, producing the updated set of zones 3 may be performed in response to determining that the update is valid with respect to the first error-detecting code.

### Action 205

The method may comprise, when determining, e.g., as part of action 203, that the update is not valid with respect to the first error-detecting code, issuing an indication indicating that the obtained update is not used to update the set of zones 1.

The updating procedure, can then be restarted, e.g., from action 201, and incorrect update of the set of zones 1 will not be transmitted to the one or more autonomous vehicles 5.

### Action 206

The method comprises providing an indication of the update 2 or the updated set of zones 3 to the verifying entity 12. The verifying entity 12 may be configured to perform the verification, or at least trigger a verification of the indication of the update 2 or the updated set of zones 3.

In some examples, providing the indication of the update 2 or the updated set of zones 3 to the verifying entity 12 is performed in response to determining that the update is valid with respect to the first error-detecting code.

In some examples, providing the indication of the update 2 or the updated set of zones 3 to the verifying entity 12 is provided accompanied with a second error-detecting code. The second error-detecting code may be a CRC code of the updated set of zones 3 and/or the update 2. In this way, the verifying entity 12 is provided with means of verifying the integrity of the update 2 or the updated set of zones 3 as provided to the verifying entity 12. This means that spontaneous bitflips or malicious attacks to change the update will be detected when the verifying entity 12 verifies the update 2 or the updated set of zones 3 with respect to the second error-detecting code.

### Action 207

The method comprises, obtaining a confirmation that the update 2 or the updated set of zones 3 provided to the verifying entity 12 is approved. While the indication of the update 2 or the updated set of zones 3 to the verifying entity 12, the confirmation may be performed by and/or sent by any suitable entity, e.g., the verifying entity 12 or the providing entity 11 or the operator 20.

In other words, the operator 20 may provide the confirmation that the update 2 or the updated set of zones 3 provided to the verifying entity 12 is approved to the producing entity 10, e.g., when Action 207 is performed as part of the producing entity 10.

### Action 208

The method comprises, in response to obtaining the confirmation that the update 2 or the updated set of zones 3 provided to the verifying entity 12 is approved, providing an indication of the update 2 or the updated set of zones 3 to the one or more autonomous vehicles 5.

In other words, the update 2 or the updated set of zones 3 may be stored in a storage medium, e.g., as a temporary set of zones, and when obtaining the confirmation, the update 2 or the updated set of zones 3 may then be sent to the one or more autonomous vehicles 5.

In response to obtaining the confirmation, the updated set of zones 3 may further replace the set of zones 1 and may be permanently stored, e.g., if needed to be obtained by any suitable entity such as new autonomous vehicles or if any of the one or more autonomous vehicles 5 loses any information relating to the set of zones 1, the update 2, or the updated set of zones 3.

### Actions 201-208 as part of the distributed system 100

In some examples, the computer system 600 is a distributed system 100 comprising one or more software modules, e.g., any one or more of the first software module, the second software module, and the third software module as discussed with reference to FIG. 1.

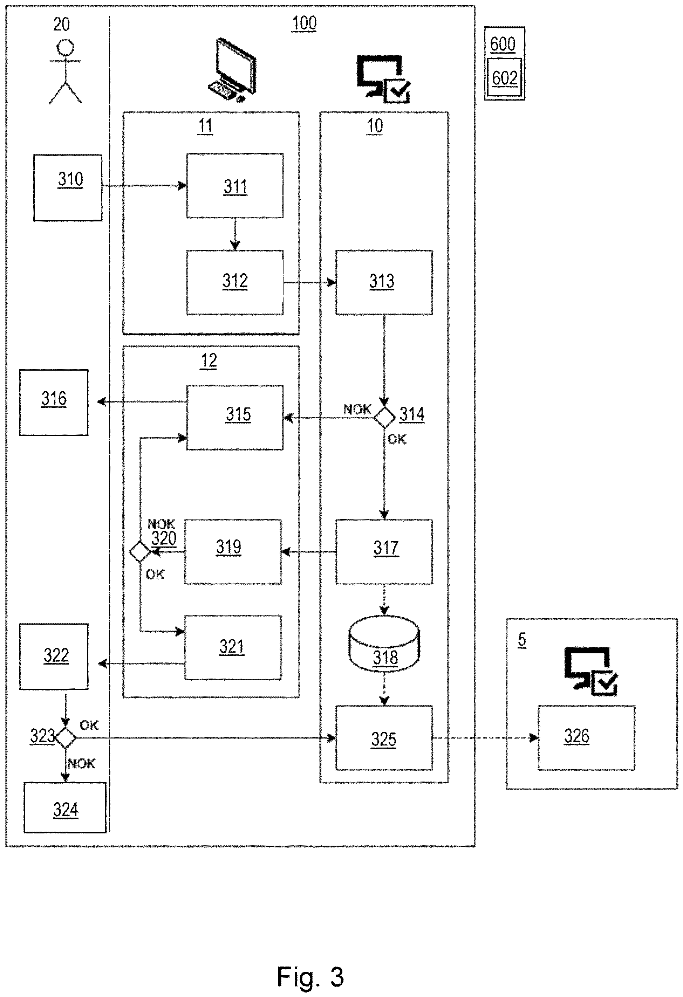

**FIG. 3** illustrates an example scenario according to some examples herein.

In this example scenario, the operator 20 wishes to update the set of zones 1, e.g., by adjusting an area, adjusting parameters for operating the one or more autonomous vehicles 5 in an area, for merging areas of two zones, for deleting a zone, for inserting a zone, or a combination thereof.

The update may be performed in the distributed system 100, which has a connection to all the n autonomous vehicles 5 of a work site to which the set of zones 1 are located in. The distributed system 100 may comprise a dedicated secure server or cloud service. The distributed system 100 may be a private system as a part of a private secure work environment, also referred to as a back office environment.

In the distributed system 100, there may be two non-safety software's that are used for certain parts and the HMI to the operator, e.g., the first software module executed as part of the providing entity 11 and/or the second software module executing as part of the verifying entity 12.

While indicated to be part of different entities, the first software module and the second software module could run on the same or different computers.

There is also a safety software which runs in a secure environment, e.g., the third software module. The secure environment may be the producing entity 10 or an environment of the producing entity 10.

In this example scenario, the operator 20 **adds 310** safety zones through a user interface to the first software module and/or providing entity 11. The input may be performed by placing corners of an area of a zone on a map.

The input may be used by the first software module and/or providing entity 11 to **generate 311** an intended update for the set of zones 1.

The input or zones may be converted into any suitable format needed by the third software module and/or producing entity 10 for further processing.

This could for example relate to converting a non-convex area of a zone inputted by the operator 20 into convex zones which may be needed by the third software module and/or producing entity 10.

The resulting zone of the intended update and describing parameters may be **packed 312** into a data message and checksums may be added, i.e., by using a CRC code. This will protect the data so that the receiver can know if there has been a fault in the data transmission.

The third software module and/or the producing entity 10 **receives 313** the data message, i.e., the update 2, and **verifies 314** the CRC and if it is not valid it means that an error has occurred in the data transmission. In that case, the data is thrown away and the operator is informed by sending a message to the second software module and/or the verifying entity 12 which will **inform 316** the operator that the update is not valid.

If the CRC of the update 2 is valid, a new CRC is added to a message comprising the updated set of zones 3, e.g., the new CRC may be added to the packed message, and sent to the second software module and/or the verifying entity 12. The set of zones 3 is stored in a local memory 318, e.g., packed as part of the received 313 data message.

The second software module and/or the verifying entity 12 **receives 319** and **verifies 320** the new CRC to detect possible transmission errors. If any of the CRCs are **determined 315** to not be valid the operator is **informed 316,** e.g., by an alert or message, and the update is not completed.

If the new CRC is valid, the updated set of zones are shown 321 to the operator 20 in the user interface. This is typically done by showing the updated set of zones 3 on a map.

The operator 20 is prompted 322 to confirm that the update 2 is valid in the context of the set of zones 1, i.e., that the set of zones 3 is the intended update to the set of zones 1.

The operator 20 looks at the updated set of zones 3 e.g., using the first or second software module and **determines 323** whether the updated set of zones 3 have been updated correctly, e.g., by visual comparison of areas and/or parameters. Alternatively an automated process may instead be used which may compare that the set of zones 1 and the update 2 is the same as the updated set of zones 3.

For example, the first software module may have a screen showing the set of zones 1 and the update 2, and the second software module may have a screen showing the updated set of zones 3.

If the updated set of zones 3 are different from the set of zones 1 with the updated 2, there has been an error somewhere in the process and the operator 20 shall take action to cancel 324 the update. If the zones are the same, the zone transfer has been successful, and the update shall be approved. In this case, the operator 20 provides a confirmation signal through a safe HMI to the third software module and/or the producing entity 10.

When the update has been confirmed, the third software module and/or the producing entity 10 collects the updated set of zones 3 from the local memory 318 and **distributes 325** the updated set of zones to all vehicles on site. At this point, the updated set of zones 3 may replace the set of zones 1.

Each autonomous vehicle 5 receives the updated set of zones 3 and accordingly updates the parameters, e.g., describing the low-speed zones. It is now possible to start operating the system directly without any testing activities. Due to the process, it can be trusted that the set of zones 1 are correctly updated.

The process in this example may be designed so that no single error, in particular the first and second software modules and/or the verifying entity 12 and the providing entity 11 will go undetected. The third software module and/or the producing entity 10 and the one or more autonomous vehicles 5 may have been rigorously designed and tested and the risk for errors in these parts are therefore very low. The first and second software modules and/or the verifying entity 12 and the providing entity 11 non-safety might however contain bugs since they may not be under the same requirements for testing. However, due to this process, the update of the set of zones 1 is guaranteed to be correct or not performed at all anyway.

However, the first software module and/or the providing entity 11 will show what the operator 20 updated on a screen. If there is an error in the first software module and/or the providing entity 11, the updated set of zones that are sent will not represent what is shown on the screen with respect to the first software module and/or the providing entity 11. Therefore, the screen of the second software module and/or the verifying entity 12 will show different zones and/or it may be otherwise compared that the set of zones 1 and the update 2 is different from the updated set of zones and the update can then be canceled.

The same will happen if the zones are altered in any way or form causing the intended update to be different from what is shown in the updated set of zones 3..

Hence, even when errors may be present, since there are two separate independent entities and/or software modules for handling the providing of the update and verification of the update, the risk of the first software module and/or the providing entity 11 and the second software module and/or the verifying entity 12 to perform or be subject to the same error is regarded as not possible or very unlikely, and therefore, the process can be trusted to correctly update the set of zones 1.

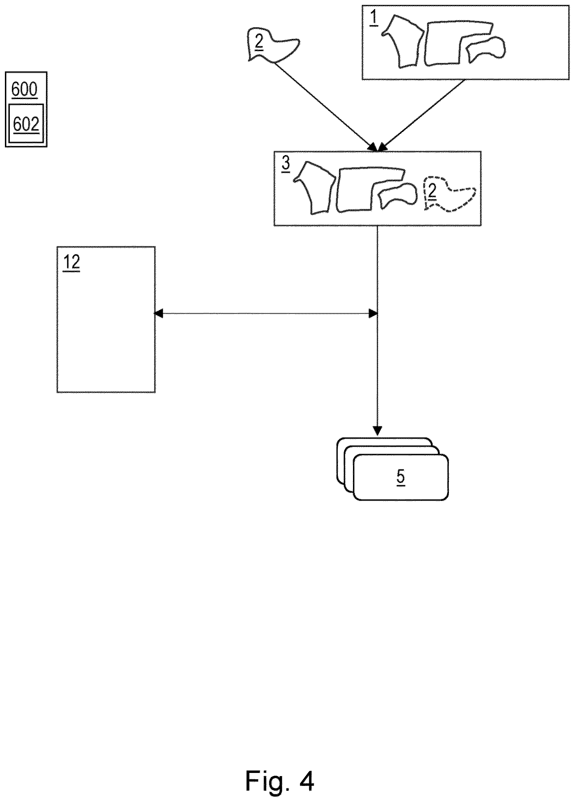

**FIG. 4** is another view of **FIG. 1****,** according to an example.

The computer system 600 comprising the processing circuitry 602 configured to handle the set of zones 1 arranged for the one or more autonomous vehicles 5 is provided. Each zone in the set of zones 1 is indicative of a respective area and indicative of one or more parameters for the one or more autonomous vehicles 5 to operate in the respective area.

The processing circuitry 602 is further configured to obtain an indication of the set of zones 1.

The processing circuitry 602 is further configured to obtain the update 2 to the set of zones 1. The update comprises a change to one or more current zones in the set of zones 1 and/or an insertion of a new zone in the set of zones 1.

The processing circuitry 602 is further configured to, based on the update and the indication of the set of zones 1, produce the updated set of zones 3.

The processing circuitry 602 is further configured to, provide an indication of the update 2 or the updated set of zones 3 to the verifying entity 12.

The processing circuitry 602 is further configured to, in response to obtaining a confirmation that the update 2 or the updated set of zones 3 provided to the verifying entity 12 is approved, provide an indication of the update 2 or the updated set of zones 3 to the one or more autonomous vehicles 5.

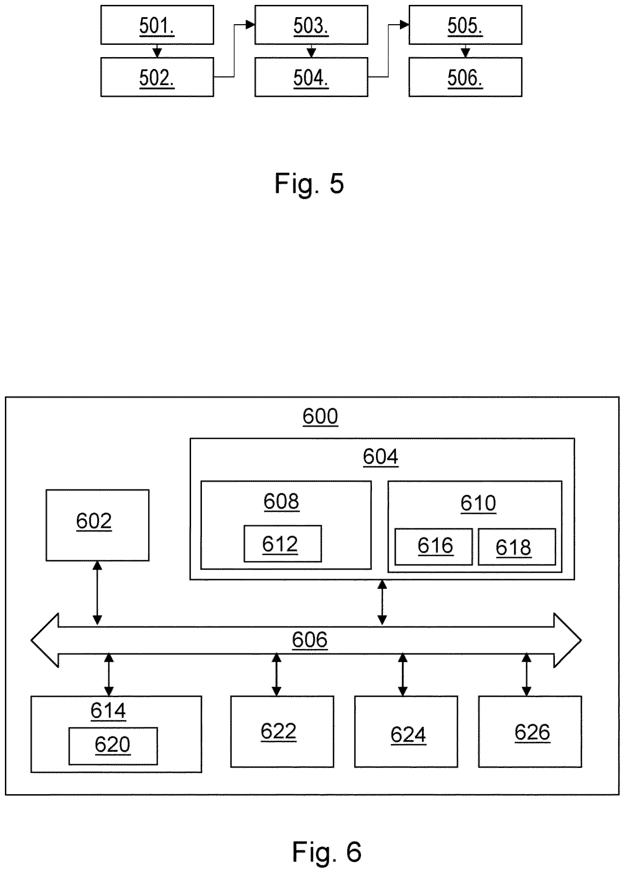

**FIG. 5** is a flow chart of an example computer-implemented method for handling the set of zones 1 arranged for the one or more autonomous vehicles 5 according to an example. Each zone in the set of zones 1 is indicative of a respective area and indicative of one or more parameters for the one or more autonomous vehicles 5 to operate in the respective area. The method comprises the following actions which may be combined with any of the above or below examples in any suitable manner.

### Action 501

The method comprises, by processing circuitry 602 of a computer system 600, obtaining an indication of the set of zones 1.

### Action 502

The method comprises, by the processing circuitry 602, obtaining an update 2 to the set of zones 1. The update comprises a change to one or more current zones in the set of zones 1 and/or an insertion of a new zone in the set of zones 1.

### Action 503

The method comprises, by the processing circuitry 602, based on the update and the indication of the set of zones 1, producing an updated set of zones 3.

### Action 504

The method comprises, by the processing circuitry 602, providing an indication of the update 2 or the updated set of zones 3 to a verifying entity 12.

### Action 505

The method comprises, by the processing circuitry 602, obtaining a confirmation that the update 2 or the updated set of zones 3 provided to the verifying entity 12 is approved.

### Action 506

The method comprises, by the processing circuitry 602, in response to obtaining the confirmation that the update 2 or the updated set of zones 3 provided to the verifying entity 12 is approved, providing an indication of the update 2 or the updated set of zones 3 to the one or more autonomous vehicles 5.

**FIG. 6** is a schematic diagram of a computer system **600** for implementing examples disclosed herein. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may include a communications interface 626 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a list of Examples 1-20 which may be combined with the above examples or the subject matter of the attached claims in any suitable manner.
Example 1. A computer system 600 comprising processing circuitry 602 configured to handle a set of zones 1 arranged for one or more autonomous vehicles 5, wherein each zone in the set of zones 1 is indicative of a respective area and indicative of one or more parameters for the one or more autonomous vehicles 5 to operate in the respective area, and wherein the processing circuitry 602 is further configured to:
   - obtain an indication of the set of zones 1,
   - obtain an update 2 to the set of zones 1, the update comprising a change to one or more current zones in the set of zones 1 and/or an insertion of a new zone in the set of zones 1,
   - based on the update and the indication of the set of zones 1, produce an updated set of zones 3,
   - provide an indication of the update 2 or the updated set of zones 3 to a verifying entity 12, and
   - in response to obtaining a confirmation that the update 2 or the updated set of zones 3 provided to the verifying entity 12 is approved, provide an indication of the update 2 or the updated set of zones 3 to the one or more autonomous vehicles 5.
Example 2. The computer system 600 of Example 1, wherein the update 2 to the set of zones 1 further is accompanied by a first error-detecting code, and wherein the processing circuitry 602 is further configured to:
   - based on the first error-detecting code, determine a validity of the update, and wherein producing the updated set of zones 3 is performed in response to determining that the update is valid with respect to the first error-detecting code.
Example 3. The computer system 600 of Example 2, wherein the first error-detecting code is a Cyclic Redundancy Check, CRC, code, of an intended update 2 to the set of zones 1.
Example 4. The computer system 600 of Example 2 or 3, wherein the processing circuitry 602 is further configured to:
   - when determining that the update is not valid with respect to the first error-detecting code, issue an indication indicating that the obtained update is not used to update the set of zones 1.
Example 5. The computer system 600 of any of Examples 2-4, wherein the processing circuitry 602 is further configured to:
   - when determining that the update is valid with respect to the first error-detecting code, provide the indication of the update 2 or the updated set of zones 3 to the verifying entity 12 accompanied with a second error-detecting code.
Example 6. The computer system 600 of Example 5, wherein the second error-detecting code is a Cyclic Redundancy Check, CRC, code, of the update 2 or the updated set of zones 3.
Example 7. The computer system 600 of any of Examples 1-6, wherein the computer system 600 is a distributed system 100 comprising one or more modules, and wherein the one or more modules comprises any one or more out of:
   - A first software module, configured to provide the update 2 to the set of zones 1,
   - A second software module, configured to verify the update 2 or the updated set of zones 3 and/or provide the update 2 or the updated set of zones 3 to an operator for verification, and/or when the update is not valid, configured to provide an indication to the operator or an providing entity 11 indicating that the update is not used to update the set of zones 1,
   - A third software module configured to: determine the validity of the update 2 to the set of zones 1 based on a first error-detecting code, produce an updated set of zones 3, and provide an indication of the update 2 or the updated set of zones 3 to a verifying entity 12 accompanied with a second error-detecting code.
Example 8. The computer system 600 of Example 7, wherein the second software module is configured to receive, as accompanied by an indication of the update 2 or the updated set of zones 3, a second error-detecting code, and to verify the validity of the indication of the update 2 or the updated set of zone based on the second error-detecting code.
Example 9. The computer system 600 of any of Example 7 or 8, wherein the second software module is configured to prompt an operator to confirm that the update 2 or the updated set of zones 3 provided to the verifying entity 12 is approved and/or provide the confirmation that the update 2 or the updated set of zones 3 provided to the verifying entity 12 is approved to the third software module in response to determining that the update 2 to the set of zones 1 as provided by the first software module corresponds with the update 2 or the updated set of zones 3 as provided by the third software module; and
   wherein the third software module is configured to, provide the indication of the update 2 or the updated set of zones 3 to the one or more autonomous vehicles 5 in response to receiving the confirmation.
Example 10. An autonomous vehicle 5 configured to operate based on a set of zones 1, wherein each zone in the set of zones 1 is indicative of a respective area and indicative of one or more parameters for the autonomous vehicle to operate in the respective area, and wherein the set of zones 1 is arranged to be updated using a computer system 600 according to any of Examples 1-9.
Example 11. A computer-implemented method for handling a set of zones 1 arranged for one or more autonomous vehicles 5, wherein each zone in the set of zones 1 is indicative of a respective area and indicative of one or more parameters for the one or more autonomous vehicles 5 to operate in the respective area, the method comprising:
   - by processing circuitry 602 of a computer system 600, obtaining 201, 501 an indication of the set of zones 1,
   - by the processing circuitry 602, obtaining 202, 502 an update 2 to the set of zones 1, the update comprising a change to one or more current zones in the set of zones 1 and/or an insertion of a new zone in the set of zones 1,
   - by the processing circuitry 602, based on the update and the indication of the set of zones 1, producing 204, 503 an updated set of zones 3,
   - by the processing circuitry 602, providing 206, 504 an indication of the update 2 or the updated set of zones 3 to a verifying entity 12, and
   - by the processing circuitry 602, in response to obtaining 207, 505 a confirmation that the update 2 or the updated set of zones 3 provided to the verifying entity 12 is approved, providing 208, 506 an indication of the update 2 or the updated set of zones 3 to the one or more autonomous vehicles 5.
Example 12. The method of Example 11, wherein the update 2 to the set of zones 1 further is accompanied by a first error-detecting code, and wherein the method comprises:
   - by the processing circuitry 602, based on the first error-detecting code, determining 203 a validity of the update, and wherein producing204 the updated set of zones 3 is performed in response to determining 203 that the update is valid with respect to the first error-detecting code.
Example 13. The method of Example 12, wherein the first error-detecting code is a Cyclic Redundancy Check, CRC, code, of an intended update 2 to the set of zones 1.
Example 14. The method of any of Examples 12-13, wherein the method further comprises:
   - when determining 203 that the update is not valid with respect to the first error-detecting code, issuing 205 an indication indicating that the obtained update is not used to update the set of zones 1.
Example 15. The method of any of Examples 12-14, further comprising:
   - when determining203 that the update is valid with respect to the first error-detecting code, providing 206 the indication of the update 2 or the updated set of zones 3 to the verifying entity 12 accompanied with a second error-detecting code.
Example 16. The method of Example 15, wherein the second error-detecting code is a Cyclic Redundancy Check, CRC, code, of the update 2 or the updated set of zones 3.
Example 17. The method of any of Examples 11-16, wherein the computer system 600 is a distributed system 100 comprising one or more modules, and wherein the one or more modules comprises any one or more out of:
   - A first software module, configured to provide the update 2 to the set of zones 1,
   - A second software module, configured to verify the update 2 or the updated set of zones 3 and/or provide the update 2 or the updated set of zones 3 to an operator for verification, and/or when the update is not valid, configured to provide an indication to the operator or an providing entity 11 indicating that the update is not used to update the set of zones 1,
   - A third software module configured to: determine the validity of the update 2 to the set of zones 1 based on a first error-detecting code, produce an updated set of zones 3, and provide an indication of the update 2 or the updated set of zones 3 to a verifying entity 12 accompanied with a second error-detecting code.
Example 18. The method of Example 17, wherein the second software module is configured to receive, as accompanied by an indication of the update 2 or the updated set of zones 3, a second error-detecting code, and to verify the validity of the indication of the update 2 or the updated set of zone based on the second error-detecting code.
Example 19. A computer program product comprising program code for performing, when executed by the processing circuitry 602, the method of any of Examples 11-18.
Example 20. A non-transitory computer-readable storage medium comprising instructions, which when executed by the processing circuitry 602, cause the processing circuitry 602 to perform the method of any of Examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (600) comprising processing circuitry (602) configured to handle a set of zones (1) arranged for one or more autonomous vehicles (5), wherein each zone in the set of zones (1) is indicative of a respective area and indicative of one or more parameters for the one or more autonomous vehicles (5) to operate in the respective area, and wherein the processing circuitry (602) is further configured to:
- obtain an indication of the set of zones (1),
- obtain an update (2) to the set of zones (1), the update comprising a change to one or more current zones in the set of zones (1) and/or an insertion of a new zone in the set of zones (1),
- based on the update and the indication of the set of zones (1), produce an updated set of zones (3),
- provide an indication of the update (2) or the updated set of zones (3) to a verifying entity (12), and
- in response to obtaining a confirmation that the update (2) or the updated set of zones (3) provided to the verifying entity (12) is approved, provide an indication of the update (2) or the updated set of zones (3) to the one or more autonomous vehicles (5).

2. The computer system (600) of claim 1, wherein the update (2) to the set of zones (1) further is accompanied by a first error-detecting code, and wherein the processing circuitry (602) is further configured to:
- based on the first error-detecting code, determine a validity of the update, and wherein producing the updated set of zones (3) is performed in response to determining that the update is valid with respect to the first error-detecting code.

3. The computer system (600) of claim 2, wherein the first error-detecting code is a Cyclic Redundancy Check, CRC, code, of an intended update (2) to the set of zones (1).

4. The computer system (600) of claim 2 or 3, wherein the processing circuitry (602) is further configured to:
- when determining that the update is not valid with respect to the first error-detecting code, issue an indication indicating that the obtained update is not used to update the set of zones (1).

5. The computer system (600) of any of claims 2-4, wherein the processing circuitry (602) is further configured to:
- when determining that the update is valid with respect to the first error-detecting code, provide the indication of the update (2) or the updated set of zones (3) to the verifying entity (12) accompanied with a second error-detecting code.

6. The computer system (600) of claim 5, wherein the second error-detecting code is a Cyclic Redundancy Check, CRC, code, of the update (2) or the updated set of zones (3).

7. The computer system (600) of any of claims 1-6, wherein the computer system (600) is a distributed system (100) comprising one or more modules, and wherein the one or more modules comprises any one or more out of:
- a first software module, configured to provide the update (2) to the set of zones (1),
- a second software module, configured to verify the update (2) or the updated set of zones (3) and/or provide the update (2) or the updated set of zones (3) to an operator for verification, and/or when the update is not valid, configured to provide an indication to the operator or an providing entity (11) indicating that the update is not used to update the set of zones (1),
- a third software module configured to: determine the validity of the update (2) to the set of zones (1) based on a first error-detecting code, produce an updated set of zones (3), and provide an indication of the update (2) or the updated set of zones (3) to a verifying entity (12) accompanied with a second error-detecting code.

8. The computer system (600) of claim 7, wherein the second software module is configured to receive, as accompanied by an indication of the update (2) or the updated set of zones (3), a second error-detecting code, and to verify the validity of the indication of the update (2) or the updated set of zone based on the second error-detecting code.

9. The computer system (600) of any of claim 7 or 8, wherein the second software module is configured to prompt an operator to confirm that the update (2) or the updated set of zones (3) provided to the verifying entity (12) is approved and/or provide the confirmation that the update (2) or the updated set of zones (3) provided to the verifying entity (12) is approved to the third software module in response to determining that the update (2) to the set of zones (1) as provided by the first software module corresponds with the update (2) or the updated set of zones (3) as provided by the third software module; and
wherein the third software module is configured to, provide the indication of the update (2) or the updated set of zones (3) to the one or more autonomous vehicles (5) in response to receiving the confirmation.

10. An autonomous vehicle (5) configured to operate based on a set of zones (1), wherein each zone in the set of zones (1) is indicative of a respective area and indicative of one or more parameters for the autonomous vehicle to operate in the respective area, and wherein the set of zones (1) is arranged to be updated using a computer system (600) according to any of claims 1-9.

11. A computer-implemented method for handling a set of zones (1) arranged for one or more autonomous vehicles (5), wherein each zone in the set of zones (1) is indicative of a respective area and indicative of one or more parameters for the one or more autonomous vehicles (5) to operate in the respective area, the method comprising:
- by processing circuitry (602) of a computer system (600), obtaining (201, 501) an indication of the set of zones (1),
- by the processing circuitry (602), obtaining (202, 502) an update (2) to the set of zones (1), the update comprising a change to one or more current zones in the set of zones (1) and/or an insertion of a new zone in the set of zones (1),
- by the processing circuitry (602), based on the update and the indication of the set of zones (1), producing (204, 503) an updated set of zones (3),
- by the processing circuitry (602), providing (206, 504) an indication of the update (2) or the updated set of zones (3) to a verifying entity (12), and
- by the processing circuitry (602), in response to obtaining (207, 505) a confirmation that the update (2) or the updated set of zones (3) provided to the verifying entity (12) is approved, providing (208, 506) an indication of the update (2) or the updated set of zones (3) to the one or more autonomous vehicles (5).

12. The method of claim 11, wherein the update (2) to the set of zones (1) further is accompanied by a first error-detecting code, and wherein the method comprises:
- by the processing circuitry (602), based on the first error-detecting code, determining (203) a validity of the update, and wherein producing(204) the updated set of zones (3) is performed in response to determining (203) that the update is valid with respect to the first error-detecting code and optionally wherein the first error-detecting code is a Cyclic Redundancy Check, CRC, code, of an intended update (2) to the set of zones (1).

13. The method of any of claims 11-12, wherein the method further comprises any of:
- when determining (203) that the update is not valid with respect to the first error-detecting code, issuing (205) an indication indicating that the obtained update is not used to update the set of zones (1), and
- when determining(203) that the update is valid with respect to the first error-detecting code, providing (206) the indication of the update (2) or the updated set of zones (3) to the verifying entity (12) accompanied with a second error-detecting code, preferably wherein the second error-detecting code is a CRC code, of the update (2) or the updated set of zones (3).

14. A computer program product comprising program code for performing, when executed by the processing circuitry (602), the method of any of claims 11-13.

15. A non-transitory computer-readable storage medium comprising instructions, which when executed by the processing circuitry (602), cause the processing circuitry (602) to perform the method of any of claims 11-13.
